# EUROPÄISCHE PATENTSCHRIFT

(11) **EP 0 216 143 B1**
(45) Veröffentlichungstag und Bekanntmachung des Hinweises auf die Patenterteilung: **13.01.1993**
(21) Anmeldenummer: 86111499.9
(22) Anmeldetag: 19.08.1986
(51) Int. Cl.: H02P 3/24, H02P 1/28

(54) **Schaltungsanordnung zur Steuerung des Anlaufens und Abbremsens von Drehstrom-Asynchronmotoren und Verfahren zum Betrieb einer derartigen Schaltungsanordnung**
Circuit arrangement for starting and braking control of three-phase asynchronous motors and method for operating such a circuit arrangement
Montage pour contrôler le démarrage et le freinage des moteurs asynchrones à courant triphasé et procédé pour l'opération de ce montage

(30) Priorität: 21.09.1985 DE 3533802
(43) Veröffentlichungstag der Anmeldung: 01.04.1987
(73) Patentinhaber: KIMO INDUSTRIE-ELEKTRONIK GMBH, D-91058 Erlangen (DE)
(72) Erfinder: Gibson, John Philip, Dr. Dipl.-Ing., D-8510 Fürth (DE); Reitter, Engelbert, Dipl.-Ing., D-8520 Erlangen (DE)
(74) Vertreter: Rau, Manfred, Dr. Dipl.-Ing.

(56) Entgegenhaltungen:
- DE-A- 2 855 330
- US-A- 3 866 097
- US-A- 4 100 469
- US-A- 4 482 853
- SOVIET INVENTIONS ILLUSTRATED, Sektion Elektrik. Woche J50, 2. Februar 1983, Zusammenfassungsnr. B1783, X13, Derwent Publication Ltd., London, GB; & SU - A - 905 968 (LOBOV VI) 15.02.1982
- PATENT ABSTRACTS OF JAPAN, Band 7, Nr. 123 (E-178)[1268], 27. Mai 1983; JP - A - 58 43191 (MITSUBISHI) 12.03.1983

## Beschreibung

Die Erfindung richtet sich auf ein Verfahren zum Betrieb einer Schaltungsanordnung zur Steuerung des Anlaufens und Abbremens von Drehstrom-Asynchronmotoren gemäß dem Oberbegriff von Anspruch 1.

Die US-A-4 482 853 zeigt eine Schaltungsanordnung zur Steuerung des Anlaufens und Abbremsens eines Drehstrom-Asynchronmotors mit Phasenanschnittssteuerungen in den Motorstrom-Zuleitungen. Jede Phasenanschnittssteuerung weist wenigstens einen von einer Steuereinrichtung gesteuerten Thyristor auf. Zwischen den Motorstrom-Zuleitungen zweier Phasen ist eine Verbindungsleitung vorgesehen, in welcher ein weiterer Thyristor angeordnet ist.

Bei der Steuerung dieser Schaltungsanordnung werden lediglich die Schützzeiten vor dem Zünden der Querthyristoren abgewartet. Die einwandfreie Funktion dieser Schaltung ist nur möglich, wenn diese Schützzeiten relativ lang gewählt werden. Ein schnelles Umschalten zwischen Treiben und Bremsen ist damit nicht möglich.

In US-A-4 100 469 wird eine Schaltung beschrieben, die einen geregelten Sanftanlauf eines Drehstrom-Asynchronmotors ermöglicht. Die Ist-Drehzahl des Motors wird durch einen Tacho-Generator erfaßt und mit dem Drehzahl-Sollwert aus einem Beschleunigungssteuergerät verglichen. Abweichungen werden durch Verstellen des Zündwinkels der Thyristoren ausgeregelt, so daß eine konstante Beschleunigung bei verschiedenen Motorbelastungen erreicht werden kann.

Aus DE-A-28 55 330 ist eine Einrichtung für das Ein-Aus-Schalten eines Drehstromsynchronmotors mit schneller Schaltfolge mittels zweier Thyristorschaltern bekannt, bei der durch Wegnahme der Steuerimpulse die Thyristoren gesperrt werden, ohne deren Löschzeit zu berücksichtigen. Es ist also ein zeitgesteuertes Umschalten von Treiben auf Bremsen beabsichtigt.

Eine weitere Schaltungsanordnung ist z.B. bekannt aus dem Aufsatz "Application of Soft-Start Controllers to Long Belt Conveyors", Strowger, Crites, IEEE Cement Industry Technical Conferencem Pennsylvania, - 1981. Derartige Schaltungen, in welchen zur stufenlosen Drehzahlverstellung und zur Erzielung eines sanften Anlaufs von Drehstromasynchron-Motoren Phasenanschnittsteuerungen verwendet werden, weisen den Vorteil auf, daß sie problemlos in eine vorhandene Steuerung integriert werden können, daß sie einen sehr kompakten Aufbau ermöglichen, daß der Spannungsverlauf frei ist von Kommutierungs-Einbrüchen, und daß während des Hochlaufs hohe Momentenstöße vermieden werden. Darüberhinaus sind derartige Geräte sanft und sprungfrei im Momentverlauf, weil Hochlaufzeit und Anlaufmoment getrennt voneinander einstellbar sind. Letztlich ist die Belastung aller Phasen beim Anlauf gleichmäßig und der Verschleiß der Schützkontakte durch stromloses Schalten erheblich reduziert.

Die vorbekannten Schaltungsanordnungen ermöglichen als solche zwar ein definiertes Hochfahren und Absenken der Drehzahl, nicht aber ein sehr schnelles Abbremsen, wie dies z.B. bei Notbremsungen, Sicherheitsbremsungen, zur Vermeidung von Resonanzerscheinungen und bei Positionierantrieben erforderlich ist.

Um solche schnellen Bremsvorgänge bei Motoren der in Betracht stehenden Art realisieren zu können, sind an sich bereits elektronische Motorbremsgeräte bekannt, wie sie z.B. in "Elektronische Bremsgeräte verkürzen unproduktive Auslaufzeiten"; Antriebstechnik 23 (1984) Nr. 6 beschrieben werden. Diese bekannten Geräte arbeiten so, daß nach dem Abschalten der Motorspannung an den Stator eine Gleichspannung angelegt wird. Diese Gleichspannung erzeugt ein magnetisches Feld, welches in der Wicklung des rotierenden Läufers eine Wechselspannung induziert. Der daraus resultierende Wechselstrom hemmt die Rotation des Läufers entsprechend der Lenz'schen Regel. Die Gleichspannung wird durch eine Thyristor-Phasenanschnittsteuerung erzeugt, wobei durch zeitliche Verschiebung des Steuerimpulses der Stromflußwinkel des Thyristors und dadurch die Höhe der Ausgleichsspannung kontinuierlich verändert werden kann. Die Größe des sich einstellenden Bremsstromes ist abhängig von der Höhe der am Bremsgerät eingestellten Gleichspannung und vom Widerstand der Motorwicklung.

Durch die stufenlose Einstellbarkeit der Ausgleichsspannung ist eine Anpassung der Bremskraft an die jeweilige Problemstellung möglich.

Beim Abschalten des Thyristors der Phasenanschnittssteuerung in jedem Null-Durchgang der Wechselspannung versucht der Strom infolge der Selbstinduktion in der Ständerwicklung seine Richtung beizubehalten. Durch das Vorsehen z.B. einer Diode parallel zur Motorwicklung ist es möglich, einen "Freilauf" dieses Stroms zu erhalten, so daß auch während der Zeit der negativen Halbwelle ein Strom durch die Motorwicklung fließt und somit den Bremseffekt verstärkt und Spitzenbelastungen vermieden werden.

Der Erfindung liegt die Aufgabe zugrunde, ein Verfahren zum Betrieb Schaltungsanordnung der eingangs genannten Art so auszugestalten, daß unter Wahrung der grundsätzlichen Vorteile einer derartigen Schaltungsanordnung, insbesondere eines sanften Anlaufens, eine schnelle, definierte Abbremsung ermöglicht wird, wobei dies mit einem möglichst geringen Aufwand an zusätzlichen Bauteilen bewerkstelligt werden soll.

Diese Aufgabe wird erfindungsgemäß gelöst durch den kennzeichnenden Teil von Anspruch 1.

Durch ein derartiges Betriebsverfahren wird ein sehr schnelles Umschalten von Treiben auf Bremsen ermöglicht, und zwar größenordnungsmäßig um einen Faktor 10 schneller als bei herkömmlichen Einrichtungen, welche mit Hilfe von Schützen umschalten. Dabei wird das danach vorgesehene schaltbare Halbleiterbauelement vorzugsweise durch einen Thyristor gebildet. Zur Erzielung einer schnellen, definierten Abbremsung kann einer der Thyristoren der ohnehin vorgesehenen Phasenanschnittsteuerungen für den Sanftanlauf durchgeschaltet und zum Anlegen einer Gleichspannung herangezogen werden, während das schaltbare Halbleiterbauelement, also vorzugsweise ein weiterer Thyristor, das Entstehen eines Freilaufstromes ermöglicht, wenn dieses Element ebenfalls auf Durchgang geschaltet ist. Dies bedeutet, daß die günstigen Eigenschaften einer an sich bekannten Sanftanlaufschaltung mit minimalem baulichem Aufwand mit den Eigenschaften bekannter Bremsschaltungen kombiniert werden, wobei sich aber von der Steuerungsseite her völlig neuartige Möglichkeiten ergeben.

Anspruch 2 beschreibt ein gleichermaßen vorteilhaftes Verfahren zum Umschalten von Bremsen auf Treiben.

Die Ansprüche 3 bis 5 beschreiben Verfahren zum Betrieb einer Schaltungsanordnung in einem Positionierantrieb, wobei jeweils an sich bekannte Positionierverfahren besonders vorteilhaft auf die mit Hilfe des erfindungsgemäßen Verfahrens gegebenen Möglichkeiten zugeschnitten wurden.

Die Ausgestaltung des Verfahrens nach Anspruch 6 ermöglicht eine vorteilhafte Drehrichtungsumkehr. Dabei kann diese Drehrichtungsumkehr mit lediglich zwei Wendeschützen realisiert werden. Dies beruht auf der Asymmetrie der beschriebenen Schaltung hinsichtlich der Phasen. Allerdings bedingt diese Asymmetrie auch die vorgesehene Schaltungsanordnung zur Erfassung der Phasenreihenfolge und die entsprechende Umschaltanordnung, welche gemäß Anspruch 7 vorzugsweise als Analogmultiplexeinrichtung ausgestaltet ist.

Insbesondere bei Verwendung des erfindungsgemäßen Verfahrens für einen Positionierantrieb erweist sich eine Ausbildung des Verfahrens gemäß Anspruch 8 als vorteilhaft. Durch die Umschaltmöglichkeit kann von einer geregelten, jedoch eine noch relativ geringe Verzögerung aufweisenden Abbremsung auf eine Abbremsung mit Hilfe des erfindungsgemäßen Verfahrens umgeschaltet werden.

Weitere Merkmale, Vorteile und Einzelheiten der Erfindung ergeben sich aus der folgenden Beschreibung einer bevorzugten Ausführungsform anhand der Zeichnung. Dabei zeigen
- Fig. 1: ein Blockschaltbild einer Ausführungsform einer Schaltungsanordnung als Sanftanlauf- und Bremsschaltung,
- Fig. 2: ein Blockschaltbild einer Ausführungsform für einen Positionierantrieb, und
- Fig. 3a bis c: verschiedene Verfahren für das Positionieren unter Verwendung einer Positioniereinrichtung gemäß Fig. 2.

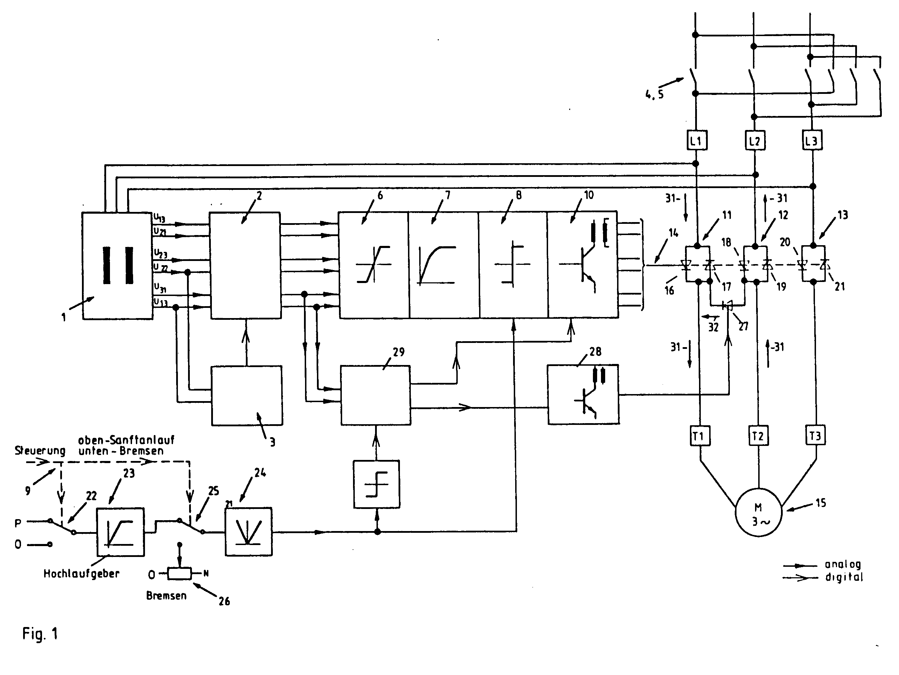

In Fig. 1 ist schematisch eine Ausführungsform einer für das erfindungsgemäße Verfahren geeigneten Schaltungsanordnung dargestellt, welche eine Drehrichtungsumkehr ermöglicht.

Zur Spannungsversorgung dient ein Synchronisationstransformator 1. An dessen Ausgang schließt sich eine Umschalteinrichtung 2 in Form einer Analog-Multiplexeinrichtung an. Diese Umschalteinrichtung arbeitet in Abhängigkeit von einer Einrichtung 3, welche mit zwei Ausgängen des Transformators 1 verbunden ist, wobei die Einrichtung 3 eine Schaltungsanordnung zur Erfassung der Phasenreihenfolge an den Einspeis-Klemmen L1, L2 und L3 darstellt, und wobei diese Schaltungsanordnung im Ausführungsbeispiel mit zwei Ausgängen U₃₂ und U₁₃ des Transformators 1 verbunden ist. Die Umschalteinrichtung 2 in Verbindung mit der Einrichtung 3 zur Erfassung der Phasenlage ermöglicht weiterhin in Verbindung mit Wendeschützen 4, 5 die Umschaltung der Drehrichtung. Soweit eine derartige Drehricht ungsumkehr nicht erforderlich ist, können die Einrichtungen 2, 3 und die Wendeschütze 4, 5 entfallen.

Die Ausgänge der Umschalteinrichtung 2 (bzw. ohne Drehrichtungsumkehr des Transformators 1) sind mit einer Begrenzungseinrichtung 6 verbunden, welcher wiederum Glättungseinrichtungen 7 und ein Komparator 8 nachgeschaltet sind. In dem Komparator 8 werden die Synchronisationssignale mit den am Steuereingang 9 anliegenden Signalen verglichen. Dem Komparator 8 nachgeschaltet sind Zündeinrichtungen 1o für Phasenanschnittsteuerungen 11, 12 und 13. Das Einwirken dieser Zündeinrichtungen 1o auf die Phasenanschnittsteuerungen 11, 12 und 13 ist durch die gestrichelte Linie 14 veranschaulicht.

Jede Phasenanschnittsteuerung 11, 12, 13 ist jeweils einer Klemme T₁, T₂, T₃ des anzusteuernden Drehstrom-Käfigläufermotors 15 vorgeschaltet.

Im Ausführungsbeispiel besteht jede Phasenanschnittsteuerung 11 bzw. 12 bzw. 13 aus zwei antiparallel geschalteten Thyristoren 16, 17 bzw. 18, 19 bzw. 2o, 21. Grundsätzlich ist es auch möglich, die Thyristoren 17, 19, 21 bzw. 16, 18, 2o jeweils durch Dioden zu ersetzen.

Die Anordnung von Transformator 1, Begrenzungseinrichtung 6, Glättungseinrichtung 7, Komparator 8, Zündeinrichtung 1o und Phasenanschnittsteuerung 11, 12 und 13 in Verbindung mit dem Motor 15 ist an sich bekannt (vgl. z.B. OMIKRON-Firmenprospekt "Lektromik elektronische Sanftanlauf-Steuergeräte"). Diese vorgenannte Schaltung ermöglicht es, auf elektronischem Wege einen sehr runden, sanften Anlauf des Motors 15 herbeizuführen. Die Ansteuerung erfolgt dabei über den Steuereingang 9, über welchen die Schalteinrichtung 22 betätigt wird, der ein Hochlaufgeber 23 und eine Betragsbildungseinrichtung 24 nachgeschaltet sind. Der Hochlaufgeber 23 gibt die Steigung des Hochlaufs bzw. der Drehzahlabsenkung vor, während die Betragsbildungseinrichtung 21 dazu dient, das bipolare Steuersignal in ein unipolares Steuersignal umzuwandeln. Zwischen dem Hochlaufgeber 23 und der Betragsbildungseinrichtung 24 ist eine Umschalteinrichtung 25 zur Umschaltung auf Bremsbetrieb mit Hilfe der vorgesehenen Bremseinrichtung vorgesehen, wobei mittels der Vorgabeeinrichtung 26 die Höhe des Bremsstromes einstellbar ist.

Die Bremseinrichtung wird im wesentlichen gebildet durch einen Thyristor 27, welcher zwischen den Phasenanschnittsteuerungen 11, 12 diesen nachgeschaltet angeordnet ist. Der Thyristor 27 wird durch eine Zündeinrichtung 28 gezündet, welche einer Schaltungsanordnung 29 für die Synchronisation der Umschaltung zwischen Treiben und Bremsen nachgeordnet ist. Eingänge dieser Schaltungsanordnung 29 sind einerseits mit den Ausgängen U₃₁ und U₁₃ des Transformators 1 bzw. der Umschalteinrichtung 2 und andererseits mit einer Grenzwertmeldeeinrichtung 3o für die Ermittlung des Schaltzustandes "Treiben" oder "Bremsen" verbunden, wobei diese Grenzwertmeldeeinrichtung ihrerseits wieder mit dem Ausgang der Betragsbildungseinrichtung 24 verbunden ist.

Beim Umschalten von Treiben auf Bremsen werden zunächst die Zündimpulse aus der Zündeinrichtung 1o für die Thyristoren 16 bis 21 der Phasenanschnittsteuerungen 11, 12 und 13 gesperrt und die Löschzeit der Thyristoren wird abgewartet (bei einer Netzfrequenz von 5o Hz also 25 ms). Anschließend wird mit Hilfe der Zündeinrichtung 28 der Thyristor 27, welcher als schaltbares Halbleiterbauelement im Ausführungsbeispiel eingesetzt ist, durchgeschaltet und ein als Brems-Thyristor wirkender Thyristor, z.B. der Thyristor 16, wird ebenfalls mittels der Zündeinrichtung 1o gezündet. Hierdurch wird an die Motorwicklung eine Gleichspannung angelegt, welche zur Ausbildung eines Gleichstroms längs der Pfeile 31 führt. Durch die Zündung der Diode 27 entsteht während der negativen Halbwelle des Brems-Thyristors 16 ein Freilaufstrom in Richtung des Pfeils 32. Der dementsprechend fließende Gleichstrom führt aufgrund der Induktion in den Wicklungen des rotierenden Läufers zu einem Strom, derart, daß eine Bremswirkung entsteht.

Die Gleichspannung kann von dem Transformator 1 abgegriffen werden, wenn diesem (in der Zeichnung nicht dargestellte) Gleichrichter und gegebenenfalls Glättungsglieder nachgeschaltet werden.

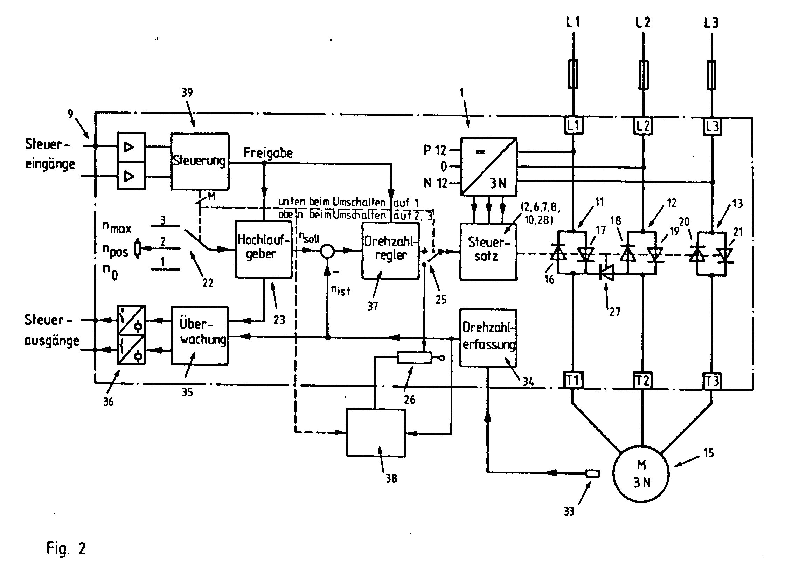

In Fig. 2 ist eine Ausführungsform der Schaltungsanordnung dargestellt, welche eine Verwendung als Positionierantrieb gestattet. Dabei entspricht die rechte Hälfte des Blockschaltbilds im wesentlichen der in Fig. 1 dargestellten und im Zusammenhang hiermit beschriebenen Schaltungsanordnung.

Bei der Verwendung als Positionierantrieb ist zusätzlich am Motor ein Drehzahlgeber 33 vorgesehen, welcher mit einer Drehzahlerfassungseinrichtung 34 verbunden ist. Die Drehzahlerfassungseinrichtung 34 ist einerseits mit einer Überwachungseinrichtung 35 verbunden, welche den Steuerausgängen 36 vorgeschaltet ist, und andererseits mit dem Ausgang des Hochlaufgebers 23 bzw. dem Eingang eines Drehzahlreglers 37.

Weiterhin ist bei der Ausführungsform nach Fig. 2 noch eine Recheneinrichtung 38 vorgesehen. Die Recheneinrichtung 38 steht in Verbindung mit der Vorgabeeinrichtung 26 für die Dosierung des Bremsstromes, welche in Abhängigkeit von der Umschalteinrichtung 25 aktivierbar ist. Bei 39 ist noch schematisch eine Steuereinrichtung eingezeichnet, welche im wesentlichen die erforderlichen Steuer-Operationen durchführt.

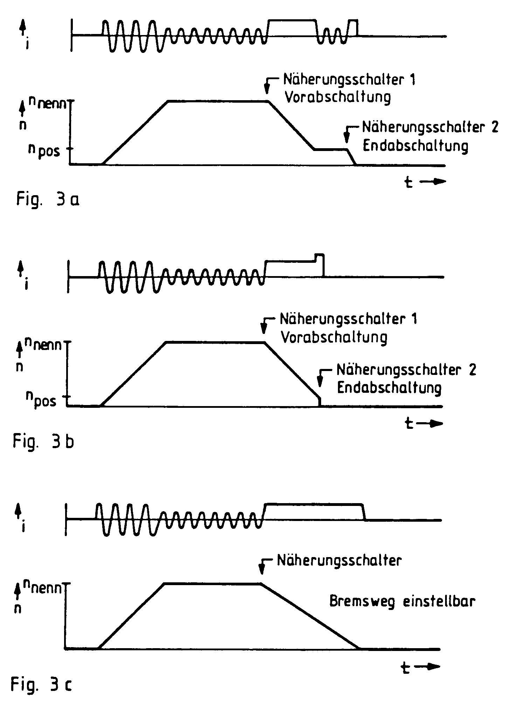

In Fig. 3 sind verschiedene Betriebsweisen der in Fig. 2 dargestellten Schaltungsanordnung bei Verwendung als Positionierantrieb dargestellt:
Bei der in Fig. 3a dargestellten Betriebsweise erfolgt das Hochfahren des Motors 15 geregelt mit Hilfe der Sanftanlaufsteuerung. Hieran anschließend erfolgt ein Betrieb mit der Nenndrehzahl n_{nenn.}

Nach Erreichen eines ersten Näherungsschalters 1 erfolgt eine geregelte Drehzahlverminderung bis zum Erreichen einer Näherungsdrehzahl (nₚₒₛ). Mit dieser Näherungsdrehzahl wird der Näherungsschalter 2 angefahren und nach dessen Erreichen erfolgt eine Endabschaltung, wobei dann die Umschalteinrichtung 25 auf Bremsen geschaltet wird und eine Zündung der Thyristoren 16 und 27 in der vorbeschriebenen Weise erfolgt.

Bei der in Fig. 3b dargestellten Betriebsweise erfolgt die Endabschaltung nach Erreichen des Näherungsschalters 2 in der vorher beschriebenen Weise, wobei jedoch nicht vorher eine Reduktion der Drehzahl auf eine Näherungsdrehzahl erfolgt.

Die Arbeitsweise der Schaltungsanordnung wird besonders deutlich durch die Auftragung des Stroms i durch die Statorwindungen oberhalb des Drehzahlverlaufs in Fig. 3. In der Anlaufphase fließt dort ein Wechselstrom hoher Amplitude und in der anschließenden Nenndrehzahl-Phase ein Wechselstrom geringerer Amplitude. In den Bremsphasen werden die Statorwicklungen mit einem Gleichstrom beaufschlagt, welcher zur Induktion eines abbremsenden Induktionsstromes in den Rotorwicklungen führt.

Bei der Betriebsweise gemäß Fig. 3b ist die Höhe des Bremsstromes nach Erreichen des Näherungsschalters 2 abhängig von der Ist-Drehzahl, welche von dem Drehzahlgeber 33 zu diesem Zeitpunkt gemessen wird. Diese Istdrehzahl wird der Recheneinrichtung 38 zugeführt, welche je nachdem, ob die Istdrehzahl oberhalb oder unterhalb des durch die Regelung gegebenen Drehzahl-Sollwerts liegt, den Bremsstrom über den Thyristor 16 höher oder niedriger einstellt.

Die in Fig. 3c dargestellte Betriebsweise arbeitet mit nur einem Näherungsschalter, wobei die Drehzahl entsprechend einer vorgegebenen Rampe auf Drehzahl O abgesenkt wird. Die Steilheit der Rampe wird entsprechend dem gewünschten Positionierweg mit Hilfe eines Sollwertpotentiometers eingestellt.

## Patentansprüche

1. Verfahren zum Betrieb einer Schaltungsanordnung zur Steuerung des Anlaufens und Abbremsens von Drehstrom-Asynchronmotoren (15), wobei zwischen den Motorstrom-Zuleitungen (U, V, W) zweier Phasen nach wenigstens zwei Phasenanschnittssteuerungen (11 bzw. 12 bzw 13) eine Verbindungsleitung vorgesehen ist, in welcher ein schaltbares Halbleiterbauelement (27) mit Gleichrichterwirkung angeordnet ist, wobei zum Umschalten von Treiben auf Bremsen die Zündimpulse für die Thyristoren (16-21) der Phasenanschnittssteuerungen (11, 12, 13) gesperrt werden, und dann verzögert das Halbleiterbauelement (27) in der Verbindungsleitung durchgeschaltet und ein als Brems-Thyristor wirkender Thyristor (16) der Phasenanschnittssteuerung (11) gezündet wird, dadurch gekennzeichnet, daß genau die Löschzeit der Thyristoren (16-21) abgewartet wird bevor der Bremsstromkreis geschlossen wird.

2. Verfahren nach Anspruch 1, dadurch gekennzeichnet, daß zum Umschalten von Bremsen auf Treiben das schaltbare Halbleiterbauelement (Thyristor 27) in der Verbindungsleitung gesperrt wird, daß die stromführende Periode des als Brems-Thyristor wirkenden Thyristors (16) der Phasenanschnittssteuerung (11) abgewartet wird, und daß dann die Thyristoren (17-21) der Phasenanschnittssteuerungen gezündet werden.

3. Verfahren nach Anspruch 1 oder 2 zum Positionieren einer mittels des Drehstrom-Asynchronmotors (15) angetriebenen Einrichtung, dadurch gekennzeichnet, daß die Motordrehzahl mittels einer Drehzahlerfassungseinrichtung (33) erfaßt und der Steuereinrichtung (6, 7, 8, 10) zugeführt wird, daß nach Auslösung eines ersten Näherungsschalters die Drehzahl entsprechend einer vorgegebenen Rampe geregelt auf eine Annäherungsdrehzahl abgesenkt und nach Erreichen eines zweiten Näherungsschalters eine Endabschaltung eingeleitet wird, wobei der Bremsstrom für die Endabschaltung in Abhängigkeit von dem Istwert der Abschaltdrehzahl über die Recheneinrichtung (38) dimensioniert wird.

4. Verfahren nach Anspruch 3, dadurch gekennzeichnet, daß nach Betätigung eines Näherungsschalters die Drehzahl entsprechend einer vorgegebenen Rampe auf Drehzahl 0 abgesenkt wird, wobei die Steigung der Rampe in Abhängigkeit von dem gewünschten Positionierweg vorgegeben wird.

5. Verfahren nach Anspruch 4, dadurch gekennzeichnet, daß ein zweiter Näherungsschalter vorgesehen ist und nach Erreichen des zweiten Näherungsschalters ein Bremsvorgang mit vorgegebenem Bremsstrom für die Endabschaltung in Abhängigkeit von dem Istwert der Schaltdrehzahl über die Recheneinrichtung (38) dimensioniert wird.

6. Verfahren nach einem der Ansprüche 1 bis 5, dadurch gekennzeichnet, daß zum Umschalten der Drehrichtung mittels Wendeschützen (4, 5) vor den Phasenanschnittssteuerungen (11, 12, 13) zwei Phasen vertauscht werden, wobei über eine Schaltungsanordnung (3) der Steuereinrichtung (6, 7, 8, 10) ein Signal zugeführt wird, welches repräsentativ ist für die relative Phasenlage.

7. Verfahren nach Anspruch 6, dadurch gekennzeichnet, daß zur Umschaltung eine Analogmultiplexeinrichtung (Umschalteinrichtung 2) herangezogen wird.

8. Verfahren nach Anspruch 6 und 7, dadurch gekennzeichnet, daß die Steuereinrichtung umschaltbar über eine Rampen-Gebereinrichtung bzw. eine Bremsstrom-Gebereinrichtung ansteuerbar ist, wobei diesen Einrichtungen jeweils ein Signal einer Drehzahlerfassungseinrichtung (33) zugeführt wird.

## Claims

1. Method for operating a circuit arrangement for controlling the start and reduction in speed of three phase asynchronous motors (15), whereby between the motor current feed lines (U, V, W) of two phases a connecting line is provided after at least two phase controls (11 or 12 or 13), in which connecting line a switchable semiconductor component (27) with unilateral conductivity is arranged, whereby for the purpose of switching over from driving to braking the ignition pulses for the thyristors (16-21) of the phase controls (11, 12, 13) are blocked, and then in delayed manner the semiconductor component (27) in the connecting line becomes conductive and a thyristor (16) of the phase control (11) acting as a brake thyristor is ignited, characterized in that exactly the gate-controlled turn-off time of the thyristors (16-21) is awaited before the brake circuit is closed.

2. Method according to claim 1, characterized in that for the purpose of switching over from braking to driving the switchable semiconductor component (thyristor 27) in the connecting line is blocked, in that the live period of the thyristor (16) of the phase control (11) acting as a brake thyristor is awaited, and in that the thyristors (17-21) of the phase controls are then ignited.

3. Method according to claim 1 or 2, for positioning a device, which is driven by means of the three-phase asynchronous motor (15), characterized in that the speed of the motor is detected by means of a speed detecting device (33) and is supplied to the control device (6, 7, 8, 10), in that after triggering a first proximity switch the speed is reduced in controlled manner to an approach speed according to a given ramp and after reaching a second proximity switch a limit stop is triggered, whereby the brake current for the limit stop is dimensioned via the computing device (38) in response to the actual value of the cutoff speed.

4. Method according to claim 3, characterized in that after operating a proximity switch the speed is reduced to speed 0 according to a given ramp, whereby the gradient of the ramp is given in response to the desired positioning path.

5. Method according to claim 4, characterized in that a second proximity switch is provided and after reaching the second proximity switch a braking process with a given brake current for the limit stop is dimensioned via the computing device (38) in response to the actual value of the switching speed.

6. Method according to one of claims 1 to 5, characterized in that for the purpose of switching over the direction of rotation by means of reversing contactors (4, 5) before the phase controls (11, 12, 13) two phases are interchanged, whereby a signal is fed to the control device (6, 7, 8, 10) via a circuit arrangement (3), which signal is representative for the relative phase position.

7. Method according to claim 6, characterized in that for the purpose of switching over an analogue multiplex device (switching device 2) is used.

8. Method according to claim 6 and 7, characterized in that the control device is switchably controllable via a ramp transmitting device and a brake current transmitting device respectively, whereby one signal, respectively, of a speed detecting device (33) is supplied to these devices.

## Revendications

1. Procédé pour l'exploitation d'un arrangement de circuit pour la commande du démarrage et du freinage de moteurs asynchrones à courant triphasé (15), dans lequel il est prévu, entre les lignes d'alimentation du moteur (U, V, W) de deux phases après au moins deux commandes de réglage de phase (11 ou 12 ou 13), une ligne de connexion, dans laquelle est placé un composant à semi-conducteur (27) commutable avec un effet de redresseur, dans lequel pour effectuer la commutation de la marche au freinage, les impulsions d'amorçage pour les thyristors (16 à 21) des commandes de réglage de phase (11, 12, 13) sont bloquées avant que le circuit de freinage ne soit fermé et ensuite le composant à semi-conducteur (27) est mis sous tension avec une temporisation dans la ligne de connexion et un thyristor (16), agissant comme thyristor de freinage, de la commande de réglage de phase (11) est amorcé.

2. Procédé selon la revendication 1, caractérisé en ce que pour effectuer la commutation du freinage à la marche, le composant à semi-conducteur commutable (thyristor 27) dans la ligne de connexion est bloqué, en ce que la période de conduction du thyristor (16), agissant comme thyristor de freinage, de la commande de réglage de phase (11) est attendue et en ce que, alors, les thyristors (17 à 21) des commandes de réglage de phase sont amorcés.

3. Procédé selon la revendication 1 ou 2, pour le positionnement d'un dispositif entraîné au moyen du moteur asynchrone à courant triphasé (15), caractérisé en ce que la vitesse du moteur est détectée au moyen d'un dispositif de détection de vitesse (33) et est fournie au dispositif de commande (6, 7, 8, 10), en ce qu'après le déclenchement d'un premier détecteur de proximité, la vitesse, réglée en fonction d'une rampe prédéfinie, est diminuée à une vitesse d'approche et qu'après l'atteinte d'un second détecteur de proximité, un déclenchement de fin de course est provoqué, le courant de freinage pour le déclenchement de fin de course étant dimensionné en fonction de la valeur réelle de la vitesse de déconnexion par l'intermédiaire du dispositif de calcul (38).

4. Procédé selon la revendication 3, caractérisé en ce que, après l'actionnement d'un détecteur de proximité, la vitesse est abaissée selon une rampe prédéfinie jusqu'à la vitesse 0, la raideur de la rampe étant prédéfinie en fonction du chemin de positionnement souhaité.

5. Procédé selon la revendication 4, caractérisé en ce qu'il est prévu un second détecteur de proximité et qu'après l'atteinte du second détecteur de proximité, une opération de freinage avec un courant de freinage prédéfini pour le déclenchement de fin de course en fonction de la valeur réelle de la vitesse de commutation est dimensionnée par l'intermédiaire du dispositif de calcul (38).

6. Procédé selon l'une quelconque des revendications 1 à 5, caractérisé en ce que, pour inverser le sens de rotation au moyen de contacteurs inverseurs (4, 5), avant les commandes de réglage de phase (11, 12, 13), deux phases sont permutées, un signal représentatif de la relation des phases étant amené au dispositif de commande (6, 7, 8, 10) par l'intermédiaire d'un arrangement de circuit (3).

7. Procédé selon la revendication 6, caractérisé en ce qu'un dispositif de multiplexage analogique (dispositif inverseur 2) est utilisé pour la commutation.

8. Procédé selon la revendication 6 et la revendication 7, caractérisé en ce que le dispositif de commande peut être commandé de manière commutable par l'intermédiaire d'un dispositif transmetteur de rampe ou d'un dispositif transmetteur de courant de freinage, un signal d'un dispositif de détection de vitesse (33) étant chaque fois fourni à ces dispositifs.
